# EUROPÄISCHE PATENTSCHRIFT

(11) **EP 4 480 135 B1**
(45) Veröffentlichungstag und Bekanntmachung des Hinweises auf die Patenterteilung: **12.08.2026**
(21) Anmeldenummer: 23706018.1
(22) Anmeldetag: 17.02.2023
(51) Int. Cl.: H04L 9/40

(54) **BEDINGTE FILTERUNG FÜR ZEITDETERMINISTISCHE FIREWALLS**
CONDITIONAL FILTERING FOR TIME-DETERMINISTIC FIREWALLS
FILTRAGE CONDITIONNEL POUR PARE-FEU DÉTERMINISTES DANS LE TEMPS

(30) Priorität: 18.02.2022 DE 102022103927
(43) Veröffentlichungstag der Anmeldung: 25.12.2024
(73) Patentinhaber: Hirschmann Automation and Control GmbH, 72654 Neckartenzlingen (DE); Hochschule Esslingen, 73728 Esslingen (DE)
(72) Erfinder: HEER, Tobias, 72636 Frickenhausen (DE); BECHTEL, Lukas, 70563 Stuttgart (DE)
(74) Vertreter: Greif, Thomas
(86) Internationale Anmeldenummer: PCT/EP2023/054098
(87) Internationale Veröffentlichungsnummer: WO 2023/156626

(56) Entgegenhaltungen:
- US-A1- 2003 051 165
- US-A1- 2012 140 630
- US-A1- 2017 111 295

## Beschreibung

Die vorliegende Erfindung bezieht sich auf ein Verfahren, um bedingte Filterungen für zeitdeterministische Firewalls zu realisieren. Folgende Dokumente bilden relevanten Stand der Technik im technischen Gebiet der vorliegenden Anmeldung: US 2012/140630 A1, US 2003/051165 A1 und US 2017/111295 A1.

Firewalls werden in Computernetzwerken dazu benötigt, die im Netzwerk versendeten Datenpakete zu filtern und nach Regeln weiterzuleiten oder zu verwerfen.

Paketfilter (Firewall oder Switch mit ACL Regeln) betrachten Pakete und entscheiden anhand eines Regelwerks. Dieses Regelwerk kann in der Firewall hinterlegt werden.

Das verstärkte Aufkommen von Echtzeitverkehr bedingt, dass auch Firewalls Pakete in Echtzeit (also mit vorgegebener Verzögerung bzw. Bearbeitungszeit) bearbeiten können. Das zur Verfügung stehende Zeitbudget kann dabei zu klein für die vollständige Analyse des Pakets bezüglich aller Firewall-Regeln sein. Dies kann von der Last der Firewall (z.B. Firewall benötigt zu lange, da andere Rechenoperationen vorrangig bearbeitet wurden) oder von parallelen Prozessen auf der Firewall (CPU wird für etwas anderes verwendet) anhängen.

Heute kennen Firewalls keine Zeitbudgets. Daher führt dies dazu, dass Firewalls Pakete mit zu hoher Verzögerung/Latenz weiterleiten können und so zeitkritische Pakete zu spät beim Empfänger im Netzwerk ankommen können. Ebenso verursacht eine stark variierende Bearbeitungszeit Probleme, da es dadurch zu stoßweiser Paketbearbeitung und dem aufstauen von Paketen kommen kann. Eine konstante Bearbeitungszeit ist daher in vielen Fällen von Vorteil, insbesondere für die genaue Vorhersage und Planung von Paketflüssen im Netzwerk.

Bisher wurde dieses Problem in der Forschung nicht intensiver betrachtet, da Firewalls nicht im Zusammenspiel mit zeitkritischem Verkehr eingesetzt wurden. Diese Erfindung beschreibt ein Verfahren, um mit dieser Situation umzugehen.

Aufgabe der vorliegenden Erfindung ist es somit, ein Verfahren zu realisieren, um zeitkritische Pakete rechtzeitig beim Empfänger ankommen zu lassen. Entsprechend stellt sich die Erfindung die Aufgabe, ein Verfahren für bedingte Filterungen für zeitdeterministische Firewalls aufzuzeigen.

Diese Aufgabe wird durch ein Verfahren nach Anspruch 1 gelöst. Vorteilhafte Ausgestaltungen sind Gegenstand der abhängigen Ansprüche.

Dazu wird ein Verfahren vorgeschlagen, welches dafür sorgt, dass Datenpakete in einem Netzwerk zu festlegbaren Zeiten am Empfänger ankommen. Das Ziel des Verfahrens ist es, die Zeit, welches ein Datenpaket vom Sender zum Ziel benötigt, vorhersagen zu können, um mit diesen definierten Zeiten den Datenverkehr im Netzwerk zu steuern und vorhersehen zu können.

Um eine konstante Bearbeitungszeit eines Pakets durch eine Firewall zu erreichen kann es sinnvoll sein die Analyse eines Pakets nach einem festen Zeitpunkt tₘₐₓ abzubrechen und das Paket ohne eine vollständige Bewertung durch die Firewall zu senden.

Die vollständige Bearbeitungszeit nehmen wir mit t_{process} an. Normalerweise würde das Paket nach Eintreffen zu Zeitpunkt t₀ zum Zeitpunkt t₀ + t_{process} gesendet werden. Die Zeitdauer t_{process} kann dabei variabel sein, da sie von der Bearbeitungszeit der Firewall sowie der Mende an Filterregeln abhängt. Ein Regelsatz einer Firewall besteht in der Regel aus mehreren (vielen) Regeln. Um eine konstante Bearbeitungszeit zu erreichen wird ein Mechanismus vorgeschlagen, welcher diese begrenzt: Bei Erreichen der maximalen Bearbeitungszeit tₘₐₓ wird dabei die Abarbeitung der Regeln unterbrochen und ein vorgegebenes Ergebnis angenommen. Das Paket wird zum Zeitpunkt t₀ + tₘₐₓ (was ggf. kleiner ist als t₀+t_{process}) gesendet. Alternativ kann auch die Überprüfung mit einem Verwerfen des Pakets nach dieser festen Zeit beendet werden. Dies sorgt dafür, dass nachfolgende Pakete nur eine definierte Zeit warten müssen.

Das Weiterleiten oder Verwerfen des Pakets wird als Firewall-Aktion im Firewall-Regelsatz definiert. Firewall-Aktionen können dabei übliche Aktionen von Firewalls wie Accept, Drop, Reject und/oder Log sein. Diese Aktionen sind auch kombinerbar.

Im falle einer Weiterleitung des Pakets wird das Paket ohne vollständige Filterung nach der maximalen Bearbeitungszeit tₘₐₓ weitergeleitet. Dies bietet sich für Pakete an, bei denen die rechtzeitige Zustellung wichtiger als die vollständige Bewertung aller Firewall regeln wiegt. Das Verwerfen des Pakets nach tₘₐₓ ist für niederpriore Pakete sinnvoll, um bei diesen unwichtigeren Paketen nicht zu viel Bearbeitungszeit aufzuwenden, was wiederum hochpriore Pakete verzögern könnte.

Die Entscheidung welche Firewall-Aktion angewendet wird (verwerfen oder weiterleiten) kann entweder für Verkehrsklassen konfiguriert werden oder sie kann anhand des Pakets mit den Matching-Regeln der Firewall ermittelt werden. So können verschiedene Aktionen für verschiedene Pakete anhand der Paketmerkmale festgelegt werden. Dies entspricht der normalen Funktion einer Firewall.

Zusätzlich kann die maximale Bearbeitungszeit tₘₐₓ anhand der Verkehrsklasse konfiguriert werden oder es können beliebige Matching-Regeln verwendet werden, um tₘₐₓ zu definieren. Dazu können neue Regeln in der Firewall eingeführt werden, die als Entscheidung eine Neuzuweisung einer Bearbeitungsstrategie (weiterleiten bzw. löschen) und/oder eines Zeitbudgets tₘₐₓ enthalten.

Da beim Senden eines Paketes nach diesem Verfahren ein Paket nach unvollständiger Prüfung zum Zeitpunkt t₀+tₘₐₓ weitergeleitet wird entsteht eventuell ein Sicherheitsproblem (Bei Entscheidung senden). Ebenso kann es zum Verlust von wichtigen niederprioren Paketen kommen (bei Entscheidung verwerfen).

Um diesen Problemen zu begegnen sehen wir zusätzlich vor, unfertig bearbeitete Pakete zum Zeitpunkt t₀ + tₘₐₓ nicht nur zu senden und zu verwerfen, sondern eine Kopie des Pakets in einem Pufferspeicher aufzubewahren, um diese Kopie später vollständig zu analysieren, sobald die Firewall genug Leistungsreserven hat, um die restlichen Regeln abzuarbeiten. Dazu werden unfertig abgebrochene Pakete in einen Pufferspeicher kopiert und bei freiwerdender Bearbeitungs-Kapazität erneut der Filterung zugeführt. In diesem zweiten späteren Filterschritt müssen nur noch die bisher nicht angewendeten Regeln betrachtet werden. Es wird daher beim Abbruch der Filterung einws Pakets ebenfalls zwischengespeichert, an welcher Regelposition die Filterung unterbrochen wurde und wie mit dem Paket verfahren wurde (Weiterleitung oder Löschung).

Im zweiten (späteren) Filterdurchgang kann für die zwischengespeicherten Pakete festgestellt werden, dass eine Weiterleitung oder Löschung nicht korrekt war. Im Falle der fälschlichen Weiterleitung kann dann ein weiteres System informiert werden (z.B. ein System zur Angriffserkennung) oder es kann eine Explizite Löschregel für Folgeverkehr in der Firewall eingefügt werden. Diese Zusatzregel wird zu Beginn der Regelliste der Firewall eingefügt, damit eine Bearbeitung dieser Regel wahrscheinlich ist. Im Falle einer fälschlichen Löschung kann die zwischengespeicherte Kopie des Pakets nach einer vollständigen Filterung weitergesendet werden.

Da der Zwischenspeicher für später zu analysierende Pakete begrenz ist kann der Zwischenspeicher so konfiguriert werden, dass Pakete nur für einen bestimmten Zeitraum zwischengespeichert werden. Danach können sie gelöscht oder gesendet werden. Ebenso kann der Zwischenspeicher so konfiguriert werden, dass bei nicht ausreichendem Platz im Zwischenspeicher entweder alte oder neu eintreffende Pakete verworfen werden.

Der Zwischenspeicher und/oder der zweite Filterdurchgang kann auch auf einem externen Netzwerkgerät durchgeführt werden.

Das beschriebene Verfahren leistet damit zwei Dinge: a) es erreicht eine garantierte Bearbeitungszeit für Pakete unabhängig von der Belastung der Firewall. B) es trägt zur Lastglättung bei, da Pakete in Zeiten geringerer Last nachbearbeitet werden können.

Weitere Merkmale ergeben sich aus den beigefügten Figuren. Es zeigen
- Figur 1:: Zeitdiagramm für eine Paketfilterung mit einem Abbruchkriterium;
- Figur 2:: Blockdiagramm zu Figur 1
- Figur 3:: Zeitdiagramm für eine Paketfilterung mit nachgelagerter Filterung;
- Figur 4:: Blockdiagramm zu Figur 3.

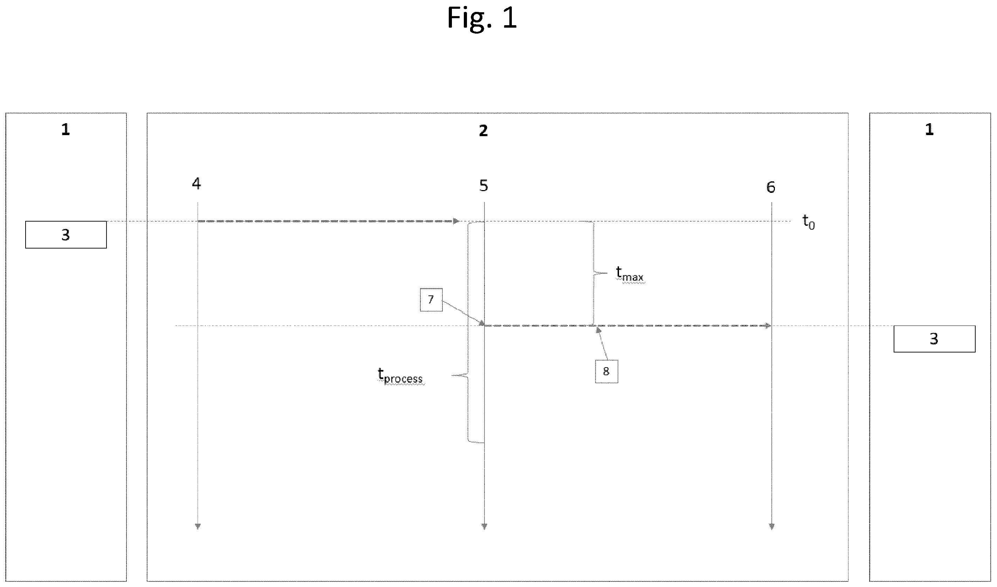

Figur 1 zeigt als Zeitdiagramm das erfindungsgemäße Verfahren. Hierbei wird ein Datenpaket 3 in einem Netzwerk 1 einer Firewall 2 zugeführt, um entsprechend der in der Firewall 2 hinterlegten Regeln untersucht zu werden. Die Ankunftszeit des Datenpakets wird mit t₀ beschrieben.

Je nach Anzahl der zu bearbeitenden Regeln, der Leistungsfähigkeit der Firewall 2und des bei der Ankunft des Datenpakets am Eingang 4 der Firewall auftretenden Arbeitsaufwand der Firewall 2benötigt das Datenpaket eine Bearbeitungszeit t_{process}. Es gibt jedoch Situationen, bei welchen eine schnelle Weiterleitung eines Datenpakets wichtiger ist, als die komplette Abarbeitung aller Filterregeln in der Firewall 2.

Um zeitdeterministisches Verhalten herbeizuführen, wird nun eingeführt, dass das Datenpaket 3 nach einem vordefinierbarem Abbruchkriterium versendet werden kann, auch wenn zu diesem Zeitpunkt die Filterung in der Firewall 2 noch nicht abgeschlossen ist. Als Abbruchkriterium wird in Figur 1 eine vorbestimmte Zeit tₘₐₓ definiert, welche die maximale Wartezeit für die Filterung eines Datenpakets 3 in der Firewall 2 benötigen darf. Ist diese Zeit abgelaufen, wird die Filterung abgebrochen 7 und das Datenpaket wird weitergeleitet 8.

Nach Ablauf der Zeit tₘₐₓ wird dann das Datenpaket 3 zum Ausgang 7 der Firewall 3 gesendet und somit weiter ins Netzwerk 1 geleitet.

Hierzu wird das Datenpaket 3 entsprechend markiert, so dass auch später noch erkennbar ist, dass für dieses Datenpaket 3 keine vollständige Filterung durch die Firewall 2 durchgeführt wurde.

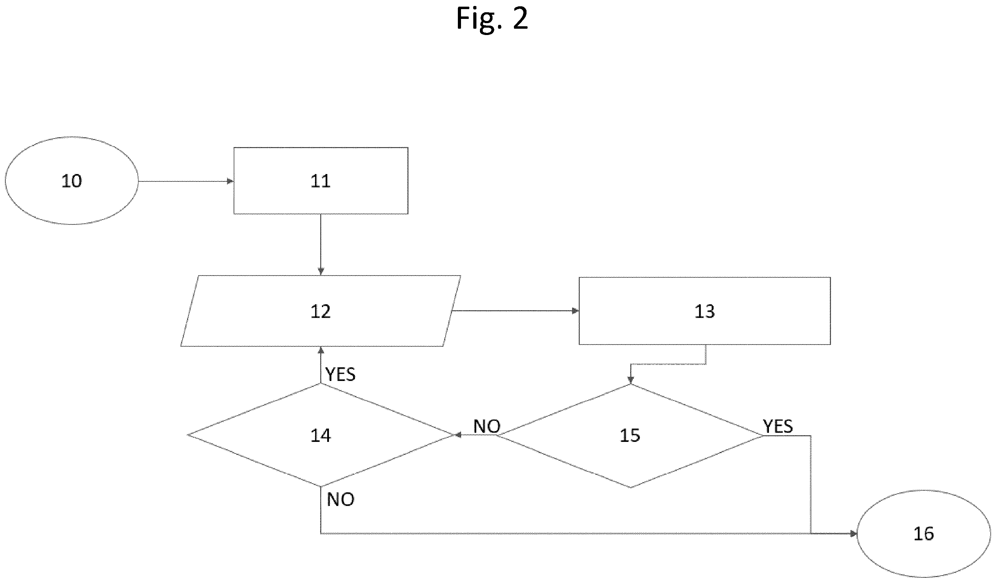

Figur 2 verdeutlicht das Verfahren nach Figur 1 als Blockdiagramm. Hierbei wird zunächst ein Datenpaket oder ein Datenframe von der Firewall empfangen 10. Dabei wird ein Zeitstempel erstellt oder die Zeit des Empfangs bei Ankunft 11 an der Firewall in funktionsgleicher Weise festgestellt. Danach beginnt die Filterbearbeitung 12 durch die Firewall.

Nachdem eine Filterregel bearbeitet wurde, wird die Zeit, welche seit der Ankunftszeit 11 vergangen ist festgehalten. Diese vergangene Zeit wird dann daraufhin überprüft, ob sie bereits einer vordefinierten maximalen Filterungszeit entspricht. Ist diese Zeit erreicht, ist das Abbruchkriterium 15 erfüllt. In diesem Falle wird das Datenpaket, obwohl noch nicht alle Filterregeln bearbeitet wurden, zum Ausgang der Firewall geleitet und somit versendet 16.

Statt des Versenden 16 der Datenpakete kann auch eine Firewallaktion durchgeführt werden. Diese kann das Weiterleiten beinhalten oder das Verwerfen des Datenpakets (3).

Sollte das Abbruchkriterium 15 noch nicht erreicht sein, wird abgefragt 14, ob weitere Regeln durch die Filterbearbeitung in der Firewall durchgeführt werden sollen. Ist dies der Fall, wird das Datenpaket der weiteren Filterbearbeitung 12 unterzogen.

Sind keine weiteren Filterregeln abzuarbeiten, kann das Datenpaket ebenfalls zum Senden 16 geleitet werden. In zeitdeterministischen Netzwerken ist ein früher ankommendes Datenpaket unkritisch, während vermieden werden soll, dass ein Datenpaket verspätet beim Empfänger ankommt.

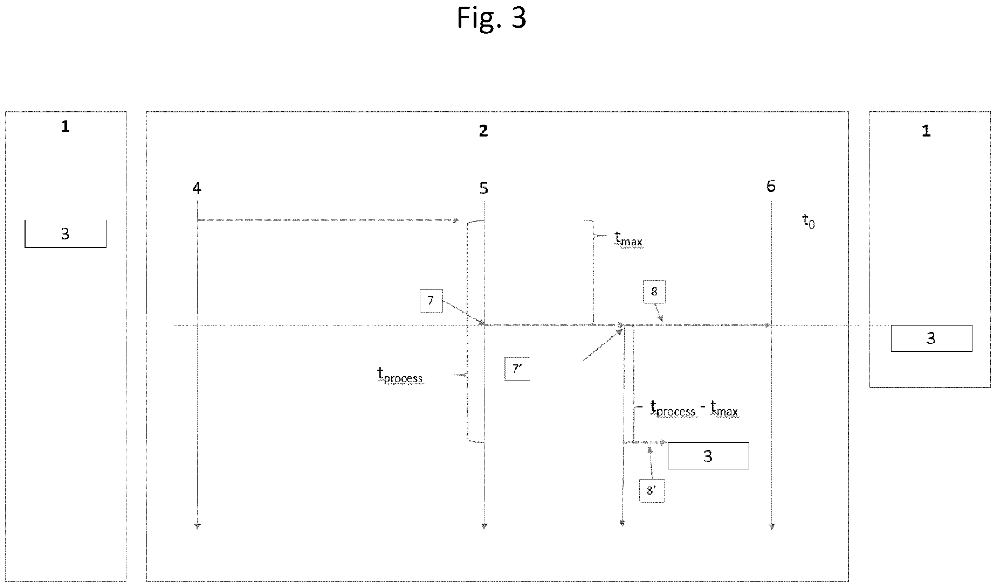

Figur 3 zeigt als Zeitdiagramm das erfindungsgemäße Verfahren nach Figur 1, wobei nun eine Zwischenspeicherung von Datenpaketen vorgesehen ist und eine Nachbearbeitung des Datenpakets. Hierbei wird ein Datenpaket 3 in einem Netzwerk 1 einer Firewall 2 zugeführt, um entsprechend der in der Firewall 2 hinterlegten Regeln untersucht zu werden. Die Ankunftszeit des Datenpakets wird mit t₀ beschrieben.

Je nach Anzahl der zu bearbeitenden Regeln, der Leistungsfähigkeit der Firewall und des bei der Ankunft des Datenpakets am Eingang 4 der Firewall auftretenden Arbeitsaufwand der Firewall benötigt das Datenpaket eine Bearbeitungszeit t_{process}. Es gibt jedoch Situationen, bei welchen eine schnelle Weiterleitung eines Datenpakets wichtiger ist, als die komplette Abarbeitung aller Filterregeln in der Firewall 2.

Um zeitdeterministisches Verhalten herbeizuführen, wird nun eingeführt, dass das Datenpaket 3 nach einem vordefinierbarem Abbruchkriterium versendet werden kann, auch wenn zu diesem Zeitpunkt die Filterung in der Firewall 2 noch nicht abgeschlossen ist. Als Abbruchkriterium wird in Figur 1 eine vorbestimmte Zeit tₘₐₓ definiert, welche die maximale Wartezeit für die Filterung eines Datenpakets 3 in der Firewall 2 benötigen darf. Ist diese Zeit abgelaufen, wird die Filterung abgebrochen 7 und das Datenpaket wird weitergeleitet 8.

Nach Ablauf der Zeit tₘₐₓ wird dann das Datenpaket 3 zum Ausgang 7 der Firewall 3 gesendet und somit weiter ins Netzwerk 1 geleitet.

Hierzu wird das Datenpaket 3 entsprechend markiert, so dass auch später noch erkennbar ist, dass für dieses Datenpaket 3 keine vollständige Filterung durch die Firewall 2 durchgeführt wurde.

Anders als in Figur 2 wird das Datenpaket 3 einem Zwischenspeicher zugeführt. Dieser Zwischenspeicher kann in der Firewall 2 integriert sein, jedoch kann auch ein weiterer Netzwerkteilnehmer dafür vorgesehen sein.

Wenn der Netzwerkteilnehmer mit dem Zwischenspeicher entsprechende Ressourcen erübrigen kann, wird die vorher abgebrochene Filterung nun fortgeführt 7'. Diese weitere Regelbearbeitung kann dann wieder von der Firewall 2 selbst oder den Netzwerkteilnehmer mit dem Zwischenspeicher durchgeführt werden.

Hierzu wird vorgeschlagen, nicht nur das Datenpaket in der Zwischenspeicherung als eines zu markieren, für welches eine Filterung abgebrochen wurde, sondern auch welche Filterregeln noch bearbeitet werden müssten bis zur vollständigen Filterung.

Die Zeit, welche für diese weitere Filterung benötigt wird, ist zu errechnen. Sie bestimmt sich aus der definierten maximalen Bearbeitungszeit, nach welcher die Bearbeitung der Firewall 2 zunächst abgebrochen wurde und der Bearbeitungszeit der Nachbearbeitung. Die Differenz der beiden Zeiten ist dann die Bearbeitungszeit für die Nachbearbeitung.

Ist die Nachbearbeitung abgeschlossen, kann eine Firewallaktion eigeleitet werden. Diese kann das nochmalige Weiterleiten 8' des Datenpakets bedeuten oder die Verwerfung des Datenpakets.

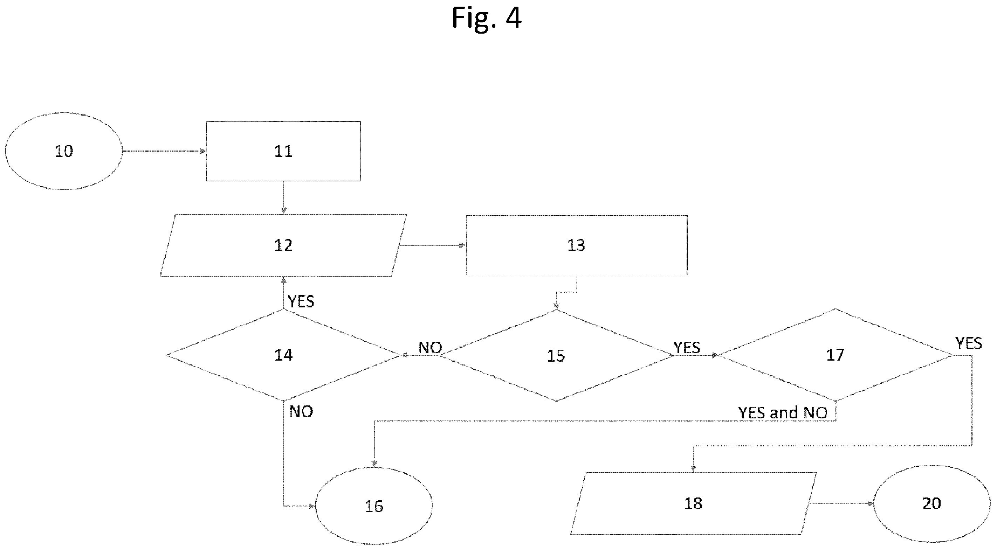

Figur 4 verdeutlicht das Verfahren nach Figur 3 als Blockdiagramm. Hierbei wird zunächst ein Datenpaket oder ein Datenframe von der Firewall empfangen 10. Dabei wird ein Zeitstempel erstellt oder die Zeit des Empfangs bei Ankunft 11 an der Firewall in funktionsgleicher Weise festgestellt. Danach beginnt die Filterbearbeitung 12 durch die Firewall.

Nachdem eine Filterregel bearbeitet wurde, wird die Zeit, welche seit der Ankunftszeit 11 vergangen ist festgehalten. Diese vergangene Zeit wird dann daraufhin überprüft, ob sie bereits einer vordefinierten maximalen Filterungszeit entspricht. Ist diese Zeit erreicht, ist das Abbruchkriterium 15 erfüllt. In diesem Falle wird das Datenpaket, obwohl noch nicht alle Filterregeln bearbeitet wurden, zum Ausgang der Firewall geleitet und somit versendet 16.

Statt des Versenden 16 der Datenpakete kann auch eine Firewallaktion durchgeführt werden. Diese kann das Weiterleiten beinhalten oder das Verwerfen des Datenpakets (3).

Ergibt die Abfrage 17, dass noch nicht alle Regeln abgearbeitet sind, wird das Datenpaket zusätzlich in einen Zwischenspeicher übertragen.

Sollte das Abbruchkriterium 15 noch nicht erreicht sein, wird abgefragt 14, ob weitere Regeln durch die Filterbearbeitung in der Firewall durchgeführt werden sollen. Ist dies der Fall, wird das Datenpaket der weiteren Filterbearbeitung 12 unterzogen.

Sind keine weiteren Filterregeln abzuarbeiten, kann das Datenpaket ebenfalls zum Senden 16 geleitet werden. In zeitdeterministischen Netzwerken ist ein früher ankommendes Datenpaket unkritisch, während vermieden werden soll, dass ein Datenpaket verspätet beim Empfänger ankommt.

Ist ein Datenpaket für eine spätere Nachbearbeitung gekennzeichnet worden und/oder ist das Datenpaket in dem Zwischenspeicher für eine nachträglich Bearbeitung 18 aufgenommen worden, erfolgt diese spätere Bearbeitung 18 zu einem späteren Zeitpunkt, wenn der Netzwerkteilnehmer dafür Ressourcen erübrigen kann.

Dabei wird die Filterbearbeitung an der Stelle fortgeführt, an welcher das Abbruchkriterium 15 einen Abbruch der Bearbeitung in der Firewall bewirkt hat. Nach Beendigung der Filterung wird das Datenpaket dann einer Firewallaktion 20 unterzogen und damit weitergeleitet oder verworfen.

### BEZUGSZEICHENLISTE

- 1: Netzwerk
- 2: Firewall
- 3: Datenpaket
- 4: Eingang
- 5: Bearbeitung
- 6: Ausgang
- 7: Regelbearbeitung abbrechen
- 7': Regelbearbeitung fortführen
- 8: Weiterleitung
- 8': Erneute Weiterleitung

- 10: Empfang
- 11: Ankunftszeit
- 12: Bearbeitung
- 13: Bearbeitungszeit feststellen
- 14: Abfrage nach weiteren Regeln
- 15: Abbruchkriterium
- 16: Senden
- 17: Abfrage nach weiteren Regeln
- 18: Spätere Bearbeitung

- 20: Firewallaktion

## Patentansprüche

1. Verfahren, um Datenpakete (3) in einem Netzwerk (1) zu festlegbaren Zeiten am Empfänger ankommen zu lassen,
mit einer Firewall (2) in einem Computernetzwerk (1), welche Filterregeln beinhaltet,
wobei jedem Datenpaket (3) ein Zeitbudget für die Verarbeitung in der Firewall (2) zugewiesen wird,
wobei eine definierbare Firewall-Aktion (20) für das jeweiligen Datenpaket nach Ablauf des Zeitbudgets durchgeführt wird,
wobei die Firewall-Aktion (20) auch dann durchgeführt wird, wenn zum Ablauf des Zeitbudgets die Verarbeitung der Filterregeln in der Firewall (2) noch nicht abgeschlossen ist,
wobei für den Fall, dass nach Ablauf des Zeitbudgets die Verarbeitung der Filterregeln in der Firewall (2) noch nicht abgeschlossen ist, das entsprechende Datenpaket markiert und mit Zusatzinformationen versehen wird, wobei diese Kennzeichnung die noch ausstehenden Filterregeln, welche durch die Firewall (2) noch nicht bearbeitet wurden, beinhaltet.

2. Verfahren nach Anspruch 1, **dadurch gekennzeichnet, dass** eine Bearbeitungszeit der Firewall (2) die Zeit vom Eingang (4) eines Datenpakets (3) an der Firewall (2) über die Bearbeitung (5) zum Ausgang (6) des Datenpakets an der Firewall (2) umfasst.

3. Verfahren nach einem der Ansprüche 1 oder 2, **dadurch gekennzeichnet, dass** das Zeitbudget für die Verarbeitung des Datenpakets (3) in der Firewall (2) einer definierbare Maximalzeit (15) entspricht, welche kleiner sein kann als die Zeit (12) der Bearbeitung durch die Firewall (2).

4. Verfahren nach Anspruch 3, **dadurch gekennzeichnet, dass** das Datenpaket (3) nach einem Abbruchkriterium (15) als Firewall-Aktion (20) zum Ausgang (7) der Firewall (3) gesendet (16) wird.

5. Verfahren nach Anspruch 4, **dadurch gekennzeichnet, dass** das Datenpaket (3) nach einem Abbruchkriterium (15) als Firewall-Aktion (20) verworfen wird.

6. Verfahren nach Anspruch 4 oder 5, **dadurch gekennzeichnet, dass** als Abbruchkriterium (15) der Ablauf der definierten Maximalzeit (15) definiert wird.

7. Verfahren nach einem der Ansprüche 1 bis 6, **dadurch gekennzeichnet, dass** für den Fall, dass nach Ablauf des Zeitbudgets die Verarbeitung der Filterregeln in der Firewall (2) noch nicht abgeschlossen ist, das entsprechende Datenpaket in einem Zwischenspeicher gespeichert wird.

8. Verfahren nach Anspruch 7, **dadurch gekennzeichnet, dass** der Zwischenspeicher in einem Netzwerkteilnehmer außerhalb der Firewall (2) angeordnet ist.

9. Verfahren nach Anspruch 7 oder 8, **dadurch gekennzeichnet, dass** ein Datenpaket (3) aus dem Zwischenspeicher nach der Firewall-Aktion nachbearbeitet wird, um die Bearbeitung der Filterregeln der Firewall (2) zu komplettieren.

10. Verfahren nach Anspruch 9, **dadurch gekennzeichnet, dass** nach Komplettierung der Bearbeitung der Filterregeln ebenfalls eine Firewall-Aktion (20) durchgeführt wird.

11. Verfahren nach einem der Ansprüche 1 bis 10, **dadurch gekennzeichnet, dass** eine Zeiterfassung der Datenpakete (3) bei Ankunft (11) am Eingang (4) der Firewall (2) erfolgt.

12. Verfahren nach einem der Ansprüche 1 bis 10, **dadurch gekennzeichnet, dass** die Bearbeitungszeit der Zeit entspricht, die die Filterbearbeitung (12) der Firewall (2) für ein Datenpaket (3) benötigt.

13. Verfahren nach einem der Ansprüche 7 bis 10, **dadurch gekennzeichnet, dass** die spätere Bearbeitung (18) der Filterregeln für ein Datenpaket (3) im Zwischenspeicher durch einen Netzwerkteilnehmer außerhalb der Firewall (2) ausgeführt wird.

## Claims

1. Method enabling data packets (3) to arrive at the receiver at definable times in a network (1),
comprising a firewall (2), containing filter rules, in a computer network (1),
wherein each data packet (3) is assigned a time budget for processing in the firewall (2),
wherein a definable firewall action (20) is carried out for the respective data packet after the time budget has expired,
wherein the firewall action (20) is also carried out if the processing of the filter rules in the firewall (2) has not yet been completed when the time budget expires, wherein, in the event that the processing of the filter rules in the firewall (2) has not yet been completed after the time budget has expired, the corresponding data packet is marked and provided with additional information, wherein this marking contains the filter rules that are still outstanding and have not yet been processed by the firewall (2).

2. Method according to Claim 1, **characterized in that** a processing time of the firewall (2) spans the time from the entry (4) of a data packet (3) at the firewall (2), through processing (5), to the data packet exiting (6) the firewall (2).

3. Method according to either of Claims 1 and 2, **characterized in that** the time budget for the processing of the data packet (3) in the firewall (2) corresponds to a definable maximum time (15) that may be less than the time (12) of the processing by the firewall (2).

4. Method according to Claim 3, **characterized in that** the data packet (3) is sent (16) to the exit (7) of the firewall (3) as a firewall action (20) following a stop criterion (15).

5. Method according to Claim 4, **characterized in that** the data packet (3) is discarded as a firewall action (20) following a stop criterion (15).

6. Method according to Claim 4 or 5, **characterized in that** the expiry of the defined maximum time (15) is defined as a stop criterion (15).

7. Method according to one of Claims 1 to 6, **characterized in that**, in the event that the processing of the filter rules in the firewall (2) has not yet been completed after the time budget has expired, the corresponding data packet is stored in a buffer memory.

8. Method according to Claim 7, **characterized in that** the buffer memory is arranged in a network subscriber outside the firewall (2).

9. Method according to Claim 7 or 8, **characterized in that** a data packet (3) from the buffer memory is post-processed after the firewall action in order to complete the processing of the filter rules of the firewall (2).

10. Method according to Claim 9, **characterized in that**, after the filter rules have finished being processed, a firewall action (20) is likewise carried out.

11. Method according to one of Claims 1 to 10, **characterized in that** data packets (3) have their time recorded upon arrival (11) at the entry (4) to the firewall (2).

12. Method according to one of Claims 1 to 10, **characterized in that** the processing time corresponds to the time required by the filter processing (12) of the firewall (2) for a data packet (3).

13. Method according to one of Claims 7 to 10, **characterized in that** the subsequent processing (18) of the filter rules for a data packet (3) in the buffer memory is carried out by a network subscriber outside the firewall (2).

## Revendications

1. Procédé pour faire parvenir des paquets de données (3) au destinataire dans un réseau (1) à des moments pouvant être spécifiés,
comprenant un pare-feu (2) dans un réseau informatique (1), lequel contient des règles de filtrage,
un budget de temps pour le traitement dans le pare-feu (2) étant attribué à chaque paquet de données (3),
une action de pare-feu (20) définissable étant exécutée pour le paquet de données respectif après expiration du budget de temps,
l'action de pare-feu (20) étant également exécutée si, à l'expiration du budget de temps, le traitement des règles de filtrage dans le pare-feu (2) n'est pas encore terminé,
dans le cas où le traitement des règles de filtrage dans le pare-feu (2) n'est pas encore terminé après l'expiration du budget de temps, le paquet de données correspondant étant marqué et doté d'informations supplémentaires, cette identification contenant les règles de filtrage encore en suspens qui n'ont pas encore été traitées par le pare-feu (2).

2. Procédé selon la revendication 1, **caractérisé en ce qu'**un temps de traitement du pare-feu (2) comprend le temps de l'entrée (4) d'un paquet de données (3) au niveau du pare-feu (2) à la sortie (6) du paquet de données au niveau du pare-feu (2), en passant par le traitement (5).

3. Procédé selon l'une des revendications 1 ou 2, **caractérisé en ce que** le budget de temps pour le traitement du paquet de données (3) dans le pare-feu (2) correspond à un temps maximal (15) définissable, lequel peut être inférieur au temps (12) du traitement par le pare-feu (2).

4. Procédé selon la revendication 3, **caractérisé en ce que** le paquet de données (3) est envoyé (16) vers la sortie (7) du pare-feu (15) en tant qu'action de pare-feu (20) selon un critère de terminaison (3).

5. Procédé selon la revendication 4, **caractérisé en ce que** le paquet de données (3) est éliminé en tant qu'action de pare-feu (20) selon un critère de terminaison (15).

6. Procédé selon la revendication 4 ou 5, **caractérisé en ce que** l'expiration du temps maximal (15) défini est définie comme critère de terminaison (15).

7. Procédé selon l'une des revendications 1 à 6, **caractérisé en ce que**, dans le cas où le traitement des règles de filtrage dans le pare-feu (2) n'est pas encore terminé après l'expiration du budget de temps, le paquet de données correspondant est stocké dans une mémoire tampon.

8. Procédé selon la revendication 7, **caractérisé en ce que** la mémoire tampon est disposée dans un nœud de réseau à l'extérieur du pare-feu (2).

9. Procédé selon la revendication 7 ou 8, **caractérisé en ce qu'**un paquet de données (3) provenant de la mémoire tampon est post-traité après l'action de pare-feu afin d'achever le traitement des règles de filtrage du pare-feu (2).

10. Procédé selon la revendication 9, **caractérisé en ce que**, après l'achèvement du traitement des règles de filtrage, une action de pare-feu (20) est également exécutée.

11. Procédé selon l'une des revendications 1 à 10, **caractérisé en ce qu'**un enregistrement temporel des paquets de données (3) a lieu lors de l'arrivée (11) à l'entrée (4) du pare-feu (2).

12. Procédé selon l'une des revendications 1 à 10, **caractérisé en ce que** le temps de traitement correspond au temps qui est nécessaire au traitement de filtrage (12) du pare-feu (2) pour un paquet de données (3).

13. Procédé selon l'une des revendications 7 à 10, **caractérisé en ce que** le traitement ultérieur (18) des règles de filtrage pour un paquet de données (3) dans la mémoire tampon est effectué par un nœud de réseau à l'extérieur du pare-feu (2).
